(19) Europäisches Patentamt
European Patent Office
Office européen des brevets

(11) **EP 3 661 020 B1**

(12) **EUROPEAN PATENT SPECIFICATION**

(45) Date of publication and mention
of the grant of the patent:
**11.08.2021 Bulletin 2021/32**

(51) Int Cl.:
*H02K 1/18* *(2006.01)*       *F04B 39/00* *(2006.01)*
*F04C 29/00* *(2006.01)*       *H02K 1/14* *(2006.01)*

(21) Application number: **18837784.0**

(86) International application number:
**PCT/JP2018/022341**

(22) Date of filing: **12.06.2018**

(87) International publication number:
**WO 2019/021658 (31.01.2019 Gazette 2019/05)**

(54) **COMPRESSOR**

VERDICHTER

COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2017 JP 2017144508**

(43) Date of publication of application:
**03.06.2020 Bulletin 2020/23**

(73) Proprietor: **Mitsubishi Heavy Industries Thermal
Systems, Ltd.
Tokyo 108-8215 (JP)**

(72) Inventors:
  • **OGAWA, Makoto**
    **Tokyo 108-8215 (JP)**
  • **SATO, Hajime**
    **Tokyo 108-8215 (JP)**
  • **ESAKI, Ikuo**
    **Tokyo 108-8215 (JP)**
  • **UNO, Masanari**
    **Tokyo 108-8215 (JP)**
  • **SHIMAYA, Hirofumi**
    **Tokyo 108-8215 (JP)**

(74) Representative: **Studio Torta S.p.A.
Via Viotti, 9
10121 Torino (IT)**

(56) References cited:
  EP-A2- 1 384 893       EP-A2- 1 833 139
  EP-A2- 1 952 511       JP-A- 2010 063 344
  JP-A- 2015 002 650     JP-A- 2015 002 650
  JP-U- H0 296 494       JP-U- S5 999 669

## Description

### TECHNICAL FIELD

The present invention relates to a compressor.

### BACKGROUND ART

A rotary compressor is known as one type of a compressor used in an air conditioner. The rotary compressor includes a motor which is driven by an external power supply and a compressor main body which is connected to an output shaft of the motor. The compressor main body includes a crankshaft which is rotationally driven by the output shaft, a piston rotor which is provided integrally with the crankshaft, and a cylinder which covers the piston rotor. The piston rotor eccentrically rotates at a position different from the output shaft in the cylinder, and thus, air in the cylinder is compressed and high-pressure compressed air is generated.

For example, as a specific example of a motor (electric motor) for the rotary compressor, a motor described in Patent Document 1 below is known. The motor described in Patent Document 1 includes a rotor which is provided on an output shaft, and a substantially annular stator core (stator) to which a plurality of coils covering the rotor from an outer peripheral side are attached. An outer peripheral surface of the stator core is interference-fitted to an inner peripheral surface of a housing of a rotary compressor through processing such as shrink fitting. Other compressors are shown in Patent Documents 2, 3 and 4.

### Citation List

### Patent Literature

[Patent Document 1] Japanese Unexamined Patent Application, First Publication No. 2008-271616
[Patent Document 2] EP 1833139 A2
[Patent Document 3] EP 1384893 A2
[Patent Document 4] JP 2015-002650

### DISCLOSURE OF INVENTION

### Technical Problem

Here, in recent years, attention has been focused on improving efficiency of a motor as one measure for improving efficiency of a compressor. Copper loss and iron loss are mainly known as factors which hinder improvement in efficiency of a motor. The copper loss is an energy loss caused by a resistance component of a copper wire constituting a coil. Moreover, the iron loss is an energy loss caused by physical properties and a shape of a stator core around which a coil is wound. Generally, a thicker copper wire is used for a coil, and thus, the copper loss can be reduced, and efficiency of the motor can increase. However, as a thickness of the copper wire increases, a cross-sectional area (width) of the stator core is reduced. Accordingly, concentration of compressive stress exerted on the stator core by the housing is likely to occur in a state where the stator core is interference-fitted. As a result, iron loss of the stator core increases, and effects of reducing copper loss may be impaired. That is, there is a possibility that it is difficult to increase the efficiency of the motor.

The present invention is made to solve the above problems, and an object thereof is to provide a compressor having a more efficient motor.

### Solution to problem

According to a first aspect of the present invention, there is provided a compressor according to claim 1.

According to this configuration, the total length of the abutment portions is kept small. Therefore, compressive stress that the abutment portions receive from the housing can be reduced. Accordingly, an iron loss generated in the stator core can be reduced.

A second aspect of the present invention is claimed in claim 2.

According to this configuration, the total length of the abutment portions is kept smaller. Therefore, the compressive stress that the abutment portions receive from the housing can be reduced. Accordingly, the iron loss generated in the stator core can be further reduced.

A third aspect of the present invention is claimed in claim 3.

According to this configuration, the total length of the abutment portions is kept smaller. Therefore, the compressive stress that the abutment portions receive from the housing can be reduced. Accordingly, the iron loss generated in the stator core can be further reduced.

A fourth aspect of the present invention is claimed in claim 4.

According to this configuration, a size of the yoke is kept small. Therefore, a large slot area of the motor can be secured. Accordingly, efficiency of the motor can increase. Moreover, the slot area refers to a cross-sectional area occupied by a copper wire portion in a total cross-sectional area of the coil.

A fifth aspect of the present invention is claimed in claim 5.

According to this configuration, the size of the yoke is kept small. Therefore, a larger slot area of the motor can be secured. Accordingly, the efficiency of the motor can further increase. Moreover, the slot area refers to the cross-sectional area occupied by the copper wire portion in the total cross-sectional area of the coil.

A sixth aspect of the present invention is claimed in claim 6.

According to this configuration, the curvature radius of the round section formed in the connection portion between the inner peripheral surface of the yoke and the end portions of the teeth is kept small. Accordingly, winding collapse of the coil can be prevented. In addition, the slot area can be further increased and the efficiency of the motor can increase.

A seventh aspect of the present invention is claimed in claim 7.

According to this configuration, the winding collapse of the coil can be prevented. Moreover, the slot area can be further increased and the efficiency of the motor can increase.

An eighth aspect of the present invention is claimed in claim 8.

According to this configuration, the inner diameter of the stator core is kept small. Therefore, a large outer diameter of the rotor can be secured. Moreover, the slot area can be increased. Therefore, the efficiency of the motor can increase.

A ninth aspect of the present invention is claimed in claim 9.

According to this configuration, the inner diameter of the stator core is kept smaller. Therefore, a larger outer diameter of the rotor can be secured. Moreover, the slot area can be increased. Therefore, the efficiency of the motor can increase.

A tenth aspect of the present invention is claimed in claim 10.

According to this configuration, the large interference can be secured. Therefore, the stator core can be more firmly and stably fixed to the housing.

An eleventh aspect of the present invention is claimed in claim 11.

According to this configuration, the large plate thickness of the housing can be secured. Therefore, strength and a pressure resistance of the housing can be further increased.

Advantageous Effects of Invention

According to the present invention, it is possible to provide a compressor including a more efficient motor.

BRIEF DESCRIPTION OF DRAWINGS

FIG. 1 is a cross-sectional view showing a configuration of a compressor according to an embodiment of the present invention.
FIG. 2 is a cross-sectional view taken along line A-A of FIG. 1.
FIG. 3 is an enlarged view of a main portion of FIG. 2.
FIG. 4 is a table showing a relationship between a value of L/dl, an iron loss, a copper loss, and a motor efficiency according to an example of the present invention.

BEST MODE FOR CARRYING OUT THE INVENTION

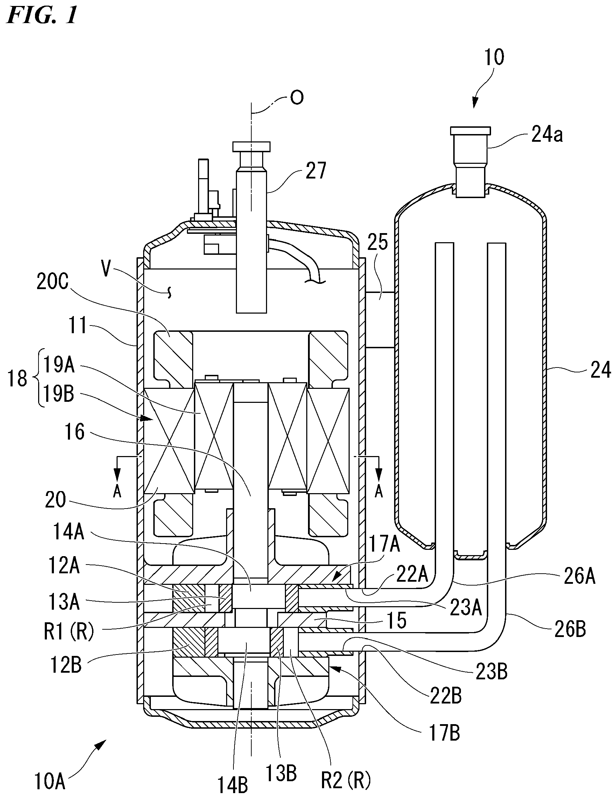

A compressor 10 according to an embodiment of the present invention will be described with reference to FIGS. 1 to 3. As shown in FIG. 1, a compressor 10 according to the present embodiment includes a motor 18 which is driven by an external power supply, a compression mechanism 10A which is driven by the motor 18 to compress a refrigerant, and a housing 11 which covers the motor 18 and the compression mechanism 10A.

The compression mechanism 10A includes a crankshaft 16 which is rotated by the motor 18, piston rotors 13A and 13B which are eccentrically rotated according to the rotation of the crankshaft 16, and cylinders 12A and 12B in which a compression chamber for accommodating the piston rotors 13A and 13B is formed.

The compression mechanism 10A is a so-called two-cylinder type rotary compressor in which the disk-shaped cylinders 12A and 12B are provided in two stages in the cylindrical housing 11 in upper and lower stages. The housing 11 surrounds the cylinders 12A and 12B, and thus, forms a discharge space V through which a compressed refrigerant is discharged. The cylindrical piston rotors 13A and 13B each having an outer shape smaller than an inside of a cylinder inner wall surface are disposed inside the cylinders 12A and 12B. The piston rotors 13A and 13B are inserted into and fixed to eccentric shaft portions 14A and 14B of a rotating shaft along a central axis of the housing 11, respectively.

The piston rotor 13A of the upper stage-side cylinder and the piston rotor 13B of the lower stage-side cylinder are provided so that phases thereof are different from each other by 180°.

In addition, a disk-shaped partition plate 15 is provided between the upper and lower cylinders 12A and 12B. A space R in the upper stage-side cylinder 12A and the lower stage-side space R do not communicate with each other and are partitioned into compression chambers R1 and R2 by the partition plate 15.

The crankshaft 16 is rotatably supported around an axis O by an upper bearing portion 17A fixed to the cylinder 12A and a lower bearing portion 17B fixed to the cylinder 12B.

The crankshaft 16 has the eccentric shaft portions 14A and 14B which are offset in a direction orthogonal to a center line of the crankshaft 16. The eccentric shaft portions 14A and 14B turn around the central axis of the crankshaft 16, and thus, the upper and lower piston rotors 13A and 13B follow the turning and eccentrically rotate in the cylinders 12A and 12B.

The crankshaft 16 protrudes upward (that is, a direction in which the motor 18 is located when viewed from the compression mechanism 10A) from the upper bearing portion 17A. A rotor 19A of the motor 18 for rotationally driving the crankshaft 16 is integrally provided at one end portion of the crankshaft 16 in a direction of the axis O. A stator 19B is fixed to an inner peripheral surface of the housing 11 so as to face an outer peripheral portion of the rotor 19A.

In the compressor 10, an accumulator 24 for performing gas-liquid separation on the refrigerant before the refrigerant is supplied to the compressor 10 is fixed to the housing 11 via a stay 25. The accumulator 24 includes suction pipes 26A and 26B for sucking the refrigerant in the accumulator 24 into the compressor 10. Distal end portions of the suction pipes 26A, 26B are connected to suction ports 23A, 23B through openings 22A, 22B.

The compressor 10 takes the refrigerant into the accumulator 24 from the suction opening 24a of the accumulator 24. Specifically, the refrigerant is separated into gas and liquid in the accumulator 24, and the gas is supplied from the suction pipes 26A and 26B to the compression chambers R1 and R2 which are internal spaces of the cylinders 12A and 12B through the suction ports 23A and 23B of the cylinders 12A and 12B.

In addition, the piston rotors 13A and 13B are eccentrically rotated, and thus, volumes of the compression chambers R1 and R2 gradually decrease, and the refrigerant is compressed. After the refrigerant passes around the motor 18, the refrigerant is discharged to a pipe 27 constituting a refrigeration cycle via a discharge port provided at an upper portion.

The motor 18 has the rotor 19A which is rotatable around the axis O, and the stator 19B which surrounds the rotor 19A about the axis O from an outer peripheral side. The rotor 19A is provided at an upper end portion of the crankshaft 16. The rotor 19A has a permanent magnet therein, and an outer shape of the rotor 19A is a substantially cylindrical shape about the axis O.

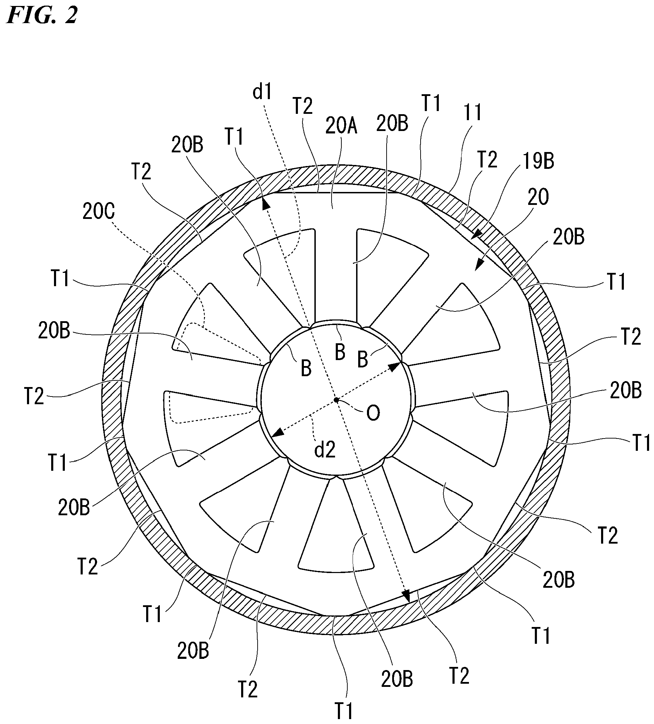

FIG. 2 is a cross-sectional view taken along line A-A of FIG. 1, and shows a detailed configuration of the stator 19B viewed in a direction of the axis O. (In addition, the rotor 19A is not shown in FIG. 2 for simplicity.) As shown in FIG. 2, the stator 19B includes a stator core 20 and a coil 20C. The stator core 20 is formed in a cylindrical shape about the axis O, and includes a yoke 20A of which an outer peripheral surface is fixed to an inner peripheral surface of the housing 11 and a plurality of teeth 20B which are formed at intervals in a circumferential direction of the yoke 20A so as to protrude from an inner peripheral surface of the yoke 20A. A plurality of electromagnetic steel sheets are stacked in a vertical direction, and thus, the stator core 20 is configured. A plurality of coils 20C are provided so as to correspond to each of the teeth 20B and are wound around each of the teeth 20B. Accordingly, the plurality of coils 20C are provided at intervals in the circumferential direction.

The yoke 20A has a regular polygonal shape when viewed in the direction of the axis O. In the present embodiment, the yoke 20A has a regular nonagonal shape. Each apex angle of the yoke 20A is chamfered in an arc shape so as to conform to the inner peripheral surface of the housing 11. The chamfered portion is interference-fitted to the inner peripheral surface of the housing 11 to form an abutment portion T1. The stator core 20 is shrink-fitted to the housing 11, and thus, the abutment portion T1 is formed. That is, after the housing 11 is heated by a burner or the like and is expanded, the stator core 20 is inserted from an opening portion. In this case, an interference (that is, deformation of the abutment portion T1 in a radial direction of the axis O) of the abutment portion T1 with respect to the housing 11 is 0.05 mm or more. Moreover, when the abutment portion T1 is formed, a forming method thereof is not limited to the above-described shrink fitting, and cold fitting can be also used in which after the stator core 20 is cooled and shrunk, the stator core 20 is inserted into the housing 11.

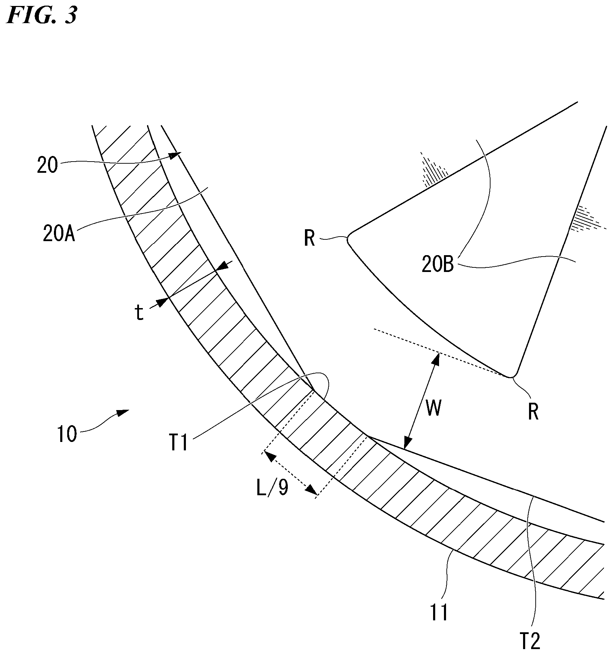

When viewed in the direction of the axis O, if a total length (a sum of contact lengths of the housing 11 and the yoke 20A) of the lengths of all (nine) abutment portions T1 is L and an outer diameter of the yoke 20A is d1, a relationship of the following Expression (1) is established between L and d1. Moreover, as shown in FIG. 2, here, the outer diameter d1 refers to a length of a straight line obtained by connecting an outermost peripheral portion of one abutment portion T1, the axis O (a center of the yoke 20A), and the inner peripheral surface of the housing 11 facing the abutment portion T1 across the axis O to each other. In FIG. 3, only one abutment portion T1 is shown, and a length of the one abutment portion T1 is represented as L/9. That is, the contact length L is a total value of lengths of the nine abutment portions T1 ($L = L/9 \times 9$).

$$0.1 \leq L/d1 \leq 1.00 ... (1)$$

Further, it is more preferable that the values of L and d1 satisfy a relationship of Expression (2).

$$0.1 \leq L/d1 \leq 0.35 ... (2)$$

In addition, it is most preferable that the values of L and d1 satisfy a relationship of Expression (3).

$$0.1 \leq L/d1 \leq 0.18 ... (3)$$

Moreover, when a width dimension (a dimension in the radial direction of the axis O) of the yoke 20A is w, the following Expression (4) is established between w and the above-described outer diameter d1.

$$w/d1 \leq 0.08 ... (4)$$

Moreover, it is more preferable that the values of w and d1 satisfy a relationship of Expression (5).

$$w/d1 \leq 0.06 ... (5)$$

A portion (a side portion of a regular nonagon) between a pair of abutment portions T1 and T1 adjacent to each other is separated from the inner peripheral surface of the housing 11 to be a non-abutment portion T2. The non-abutment portion T2 is a linear portion of the outer peripheral portion of the yoke 20A. The abutment portion T1 and the non-abutment portion T2 are continuously connected to each other. In other words, no step or the like is formed between the abutment portion T1 and the non-abutment portion T2. A slight gap is formed between the non-abutment portion T2 and a portion of the inner peripheral surface of the housing 11 facing the non-abutment portion T2. This gap serves as a flow path for high-pressure air generated by the compression mechanism 10A to flow upward.

Each of the teeth 20B has a substantially plate shape extending in the radial direction of the axis O. Each of the teeth 20B is integrally formed of the same material as the yoke 20A. Width dimensions of the teeth 20B (that is, dimensions in the circumferential direction of the axis O) are constant over an entire area in the radial direction of the axis O. The plurality of teeth 20B are provided on the inner peripheral surface of the yoke 20A at equal intervals in the circumferential direction of the axis O. The stator core 20 according to the present embodiment has nine teeth 20B. Each of the teeth 20B is provided radially inside the non-abutment portion T2 of the yoke 20A. In other words, positions of the abutment portion T1 and the teeth 20B in the circumferential direction of the axis O are different from each other. Further, each of the teeth 20B is provided at a central portion of the non-abutment portion T2 when viewed in the direction of the axis O.

As shown in FIG. 3, a round section R having a curved shape (arc shape) when viewed in the direction of the axis O is formed at a connection portion between a radially outer end portion of each of the teeth 20B and the yoke 20A. A curvature radius of the round section R is 1.5 mm or less. It is more preferable that the curvature radius of the round section R is 0.5 mm or less.

A flange portion B for holding a copper wire of the coil 20C is provided at a radially inner end portion of each of the teeth 20B. The flange portion B has a circumferential dimension larger than that of each of the teeth 20B. An inner peripheral surface of the flange portion B faces the above-described rotor 19A with a gap. A radially inner end surface of the flange portion B has an arc shape about a position of the axis O.

Here, when an inner diameter of the stator core 20 is d2, the following Expression (6) is established between d2 and the above-described outer diameter d1. In addition, here, the inner diameter d2 of the stator core 20 indicates a diameter of an imaginary circle formed by arcs of the plurality of flange portions B.

$$d2/d1 \geq 0.44... (6)$$

Moreover, it is more preferable that the values of d1 and d2 satisfy a relationship of Expression (7).

$$d2/d1 \geq 0.58... (7)$$

Further, when a plate thickness of the housing 11 is t, a relationship of the following Expression (8) is established between t and the above-described outer diameter d1.

$$t/d1 \geq 0.03... (8)$$

According to the above-described configuration, the relationship of Expression (1), Expression (2), or Expression (3) is established between the length L of the abutment portion T1 and the outer diameter d1 of the stator core 20. Accordingly, the length of the abutment portion T1 is kept small, and thus, compressive stress that the abutment portion T1 receives from the housing 11 can be reduced. Thereby, an iron loss generated in the stator core 20 when the motor 18 is driven can be reduced.

According to the above-described configuration, the length L of the abutment portion T1 is kept small, and thus, a large length of the adjacent non-abutment portion T2 can be secured. That is, the gap between the non-abutment portion T2 and a portion of the inner peripheral surface of the housing 11 facing the non-abutment portion T2 can be increased. This gap serves as a flow path for high-pressure air generated by the compression mechanism 10A to flow upward. Therefore, the high-pressure air can be more smoothly introduced.

According to the above-described configuration, when the dimension of the yoke 20A in the radial direction of the axis O is w, the relationship of Expression (4) or Expression (5) is established. Accordingly, a size of the yoke 20A is kept small, and thus, a large slot area of the motor 18 can be secured. Thus, efficiency of the motor 18 can increase. Moreover, the slot area refers to a cross-sectional area occupied by a copper wire portion in a total cross-sectional area of the coil 20C.

According to the above-described configuration, the curvature radius of the round section R formed in the connection portion between the inner peripheral surface of the yoke 20A and the end portion of each of the teeth 20B is kept small. Accordingly, winding collapse of the coil 20C can be prevented. In addition, the slot area can be further increased and the efficiency of the motor 18 can increase.

According to the above-described configuration, when the inner diameter of the stator core 20 is d2, the relationship of Expression (6) or Expression (7) is established. The inner diameter of the stator core 20 is kept small, and thus, a large outer diameter of the rotor 19A can be secured. Moreover, the slot area can be increased, and thus, the efficiency of the motor 18 can increase.

According to the above-described configuration, a large interference of the stator core 20 with respect to the housing 11 can be secured, and thus, the stator core 20 can be more firmly and stably fixed to the housing 11.

According to the above-described configuration, the large plate thickness t of the housing 11 can be secured, and thus, strength and a pressure resistance of the housing 11 can be further increased.

Hereinbefore, the embodiment of the present invention is described with reference to the drawings. In addition, the above configuration is an example, and various changes can be made to this configuration. For example, in the above embodiment, a configuration in which nine teeth 20B are provided has been described. However, the number of teeth 20B is not limited to nine, and various numbers can be adopted according to a design and specifications. Moreover, the shape of the yoke 20A is not limited to the above-described regular nonagonal shape, and may be another regular polygonal shape. In addition, the shape of the yoke 20A is not limited to a regular polygonal shape, and may be a non-equilateral polygonal shape. In this case, the lengths of contacts between the abutment portions T1 and the inner peripheral surface of the housing 11 are non-uniform. However, the value of the contact length L is the total value of the lengths of all the abutment portions T1 as described above.

EXAMPLES

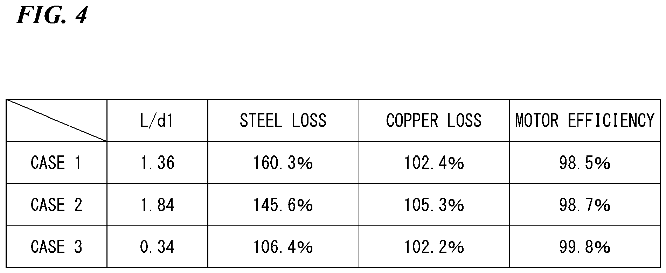

Hereinafter, examples of the present invention will be described with reference to a table shown in FIG. 4. As shown in the table, the inventors changed a value of a ratio (L/dl) between the contact length L of the abutment portion T1 and the outer diameter d1 of the stator core 20 to investigate changes of the Iron loss, the copper loss, and the motor efficiency before the shrink fitting and after the shrink fitting (Cases 1 to 3).

As shown as a comparative example in Case 1 of FIG. 4, in a case where L/dl does not satisfy the relationship of the above-described Expression (1) (L/dl = 1.36), when each of the iron loss, the copper loss, and the motor efficiency was 100% before the shrink fitting was performed, the iron loss was 160.3% and the copper loss was 102.4%. Further, the motor efficiency was 98.5%. Further, as shown as a comparative example in Case 2, in a case where L/dl = 1.84, the iron loss was 145.6% and the copper loss was 105.3%. The motor efficiency was 98.7%.

Meanwhile, as shown in Case 3, in a case where L/dl satisfies the relationship of the above-described Expression (1) (L/dl = 0.34), the iron loss was 106.4% and the copper loss was 102.2%. The motor efficiency was 99.8%. Accordingly, it is found that in Case 3, all of the iron loss, copper loss, and motor efficiency are improved as compared to Cases 1 and 2. That is, when a configuration which satisfies the relationship of the above-described Expression (1) is adopted, it is found that a motor and a compressor can be obtained in which the iron loss and the copper loss are reduced and motor efficiency is improved by about 1%.

Moreover, in recent years, when the motor efficiency is improved, generally, an increase in efficiency obtained by one improvement is in a range of at most 0.1% or a little more. However, as described above, according to the configurations of the above-described embodiment and the present comparative example, it is possible to significantly improve the motor efficiency by about 1%.

Industrial Applicability

The present invention can be applied to a compressor including a motor which includes a rotor rotatable around an axis and a stator core surrounding the rotor from an outer peripheral side about the axis, a compression mechanism which is driven by the motor to compress a refrigerant, and a housing which covers the motor and the compression mechanism. According to the compressor of the present invention, the efficiency of the compressor can increase.

Reference Signs List

10: compressor
10A: compression mechanism
11: housing
12A, 12B: cylinder
13A, 13B: piston rotor
16: crankshaft
18: motor
19A: rotor
19B: stator
20: stator core
20A: yoke
20B: teeth
20C: coil
22A, 22B: opening
23A, 23B: suction port
24: accumulator
25: stay
26A, 26B: suction pipe
27: pipe
B: flange portion
O: axis
R: round section

**Claims**

**1.** A compressor (10) comprising:

a motor (18) which includes a rotor (19A) rotatable around an axis (O) and a stator core (20) surrounding the rotor (19A) from an outer peripheral side about the axis (0);

a compression mechanism (10A) which is driven by the motor (18) to compress a refrigerant; and

a housing (11) which covers the motor (18) and the compression mechanism (10A),

wherein the inner peripheral surface of the housing has a circular shape when viewed in a direction of the axis (O) and wherein a plurality of abutment portions (T1) which are interference-fitted to the inner peripheral surface of the housing (11) and a plurality of non-abutment portions (T2) which are respectively provided to be adjacent to the abutment portions (T1) and are separated from the inner peripheral surface of the housing are formed on an outer peripheral surface of the stator core (20),

wherein the stator core (20) includes an annular yoke (20A) having the abutment portions (T1) and the non-abutment portions (T2) and a plurality of teeth (20B) extending inward in a radial direction of the axis (O) from an inner peripheral surface of the yoke (20A),

wherein an outer peripheral portion of the yoke (20A) has a regular polygonal shape when viewed in a direction of the axis (O),

wherein each apex angle of the outer peripheral portion of the yoke (20A) is chamfered in an arc shape so as to conform to the inner peripheral surface of the housing (11), thereby forming each of the abutment portions (T1),

**characterized in that** if a total length of the plurality of abutment portions (T1) is L and an outer diameter of the stator core (20) when viewed in a direction of the axis (O) is d1, wherein d1 refers to a length of a straight line obtained by connecting an outermost peripheral portion of one abutment portion (T1), the axis (O) and the inner peripheral surface of the housing facing the abutment portion (T1) across the axis (O) to each other, a relationship of Expression (1) is satisfied.

$$0.1 \leq L/d1 \leq 1.00 \ldots \ (1)$$

2. The compressor (10) according to claim 1, wherein if the total length of the plurality of abutment portions (T1) is L and the outer diameter of the stator core (20) is d1 when viewed in the direction of the axis (O), a relationship of Expression (2) is satisfied.

$$0.1 \leq L/d1 \leq 0.35 \ldots \ (2)$$

3. The compressor (10) according to claim 1 or 2,

wherein if the total length of the plurality of abutment portions (T1) is L and the outer diameter of the stator core (20) is d1 when viewed in the direction of the axis (O), a relationship of Expression (3) is satisfied.

$$0.1 \leq L/d1 \leq 0.18 \ldots \ (3)$$

4. The compressor (10) according to any one of claims 1 to 3,

wherein when a dimension of the yoke (20A) in the radial direction of the axis (O) is w, which is a distance from a connection portion between the inner peripheral surface of the yoke and each of the teeth to the closest non-abutment portion when viewed in the direction of the axis (O), a relationship of Expression (4) is satisfied.

$$w/d1 \leq 0.08 \ldots \ (4)$$

5. The compressor (10) according to claim 4, wherein a relationship of Expression (5) is satisfied.

$$w/d1 \leq 0.06 \ldots \ (5)$$

6. The compressor (10) according to any one of claims 1 to 5,

wherein when viewed in the direction of the axis (O), a curved round section (R) is formed in a connection portion between the inner peripheral surface of the yoke (20A) and radially outer end portions of the teeth (20B) and a curvature radius of the round section is 1.5 mm or less.

7. The compressor (10) according to claim 6, wherein the curvature radius of the round section is 0.5 mm or less.

8. The compressor (10) according to any one of claims 1 to 7,

wherein when an inner diameter of the stator core (20) is d2, a relationship of Expression (6) is satisfied.

$$d2/d1 \geq 0.44 \ldots \ (6)$$

9. The compressor (10) according to claim 8, wherein when the inner diameter of the stator core (20) is d2, a relationship of Expression (7) is satisfied.

$$d2/d1 \geq 0.58 \ldots \ (7)$$

10. The compressor (10) according to any one of claims 1 to 9,

wherein an interference of the stator core (20) with respect to the housing (11) is 0.05 mm or more.

11. The compressor (10) according to any one of claims 1 to 10,
wherein when a plate thickness of the housing (11) is t, a relationship of Expression (8) is satisfied.

$$t/d1 \geq 0.03 ... \quad (8)$$

**Patentansprüche**

1. Kompressor (10) umfassend:

   Einen Motor (18), welcher einen um eine Achse (O) rotierbaren Rotor (19A) umfasst und einen den Rotor (19A) von einer äußeren umfänglichen Seite um die Achse (O) umgebenden Statorkern (20);
   einen Kompressionsmechanismus (10A) welcher von dem Motor (18) angetrieben wird, um ein Kühlmittel zu komprimieren; und
   ein Gehäuse (11), welches den Motor (18) und den Kompressionsmechanismus (10A) überdeckt,
   wobei die innere umfängliche Oberfläche des Gehäuses in einer Richtung der Achse (O) betrachtet eine kreisförmige Form aufweist, und
   wobei eine Vielzahl von Anschlagsabschnitten (T1) die in Übermaßpassung an der inneren umfänglichen Oberfläche des Gehäuses (11) angesetzt sind und eine Vielzahl von Nichtanschlagsabschnitten (T2), welche entsprechend benachbart zu den Anschlagsabschnitten (T1) bereitgestellt und von der inneren umfänglichen Oberfläche des Gehäuses beabstandet angeordnet an einer äußeren Oberfläche des Statorkern (20) ausgebildet sind,
   wobei der Statorkern (20) ein ringförmiges Joch (20A) mit den Anschlagsabschnitten (T1) und den Nichtanschlagsabschnitten (T2) und eine Vielzahl von in eine radiale Richtung der Achse (O) von einer umfänglichen Oberfläche des Jochs (20A) sich nach innen erstreckenden Zähnen (20B) beinhaltet,
   wobei ein äußerer umfänglicher Abschnitt des Jochs (20A) in eine Richtung der Achse (O) betrachtet eine reguläre polygonale Gestalt aufweist,
   wobei jeder Öffnungswinkel des äußeren umfänglichen Abschnitts des Jochs (20A) in einer Bogenform angefast ist, um der inneren umfänglichen Oberfläche des Gehäuses (11) zu entsprechen, wobei dabei jeweils die Anschlagsabschnitte (T1) gebildet sind,
   **dadurch gekennzeichnet dass**, wenn eine Gesamtlänge der Vielzahl von Anschlagsabschnitten (T1) L ist und ein äußerer Durchmesser des Statorkerns (20) in eine Richtung der Achse (O) betrachtet d1 ist, wobei d1 sich auf eine Länge einer geraden Linie, welche durch Verbinden eines am weitesten außen liegenden umfänglichen Bereichs eines Anschlagsabschnitts (T1), der Achse (O) und der der inneren Anschlagsabschnitt (T1) gegenüberliegende inneren umfängliche Oberfläche des Gehäuses über zur Achse (O) miteinander erhalten wird, bezieht, eine Beziehung der Gleichung (1) erfüllt ist.

$$0,1 \leq L/d1 \leq 1,00 ... \quad (1)$$

2. Kompressor (10) nach Anspruch 1,
   wobei, wenn die Gesamtlänge der Mehrzahl von Anschlagsabschnitten (T1) L ist und der äußere Durchmesser des Statorkerns (20) in der Richtung der Achse (O) betrachtet d1 ist, eine Beziehung der Gleichung (2) erfüllt ist.

$$0,1 \leq L/d1 \leq 0,35 ... \quad (2)$$

3. Kompressor (10) nach Anspruch 1 oder 2,
   wobei, wenn die Gesamtlänge der Mehrzahl von Anschlagsabschnitten (T1) L ist und der äußere Durchmesser des Statorkerns (20) in der Richtung der Achse (O) betrachtet d1 ist, eine Beziehung der Gleichung (3) erfüllt ist.

$$0,1 \leq L/d1 \leq 0,18 ... \quad (3)$$

4. Kompressor (10) nach einem der Ansprüche 1 bis 3,
   wobei, wenn eine Dimension des Jochs (20A) in die radiale Richtung der Achse (O) w ist, was ein Abstand von einem Verbindungsabschnitt zwischen der inneren umfänglichen Oberfläche des Jochs und jedem der Zähne der am nächsten liegenden Nichtanschlagsabschnitte in die Richtung der Achse (O) betrachtet ist,
   eine Beziehung der Gleichung (4) erfüllt ist.

$$w/d1 \leq 0,08 ... \quad (4)$$

5. Kompressor (10) nach Anspruch 4,
   wobei eine Beziehung der Gleichung (5) erfüllt ist.

$$w/d1 \leq 0,06 ... \quad (5)$$

6. Kompressor (10) nach einem der Ansprüche 1 bis 5,
   wobei, betrachtet in die Richtung der Achse (O), ein gekrümmter Rundabschnitt (R) in einem Verbindungsabschnitt zwischen der inneren umfänglichen Oberfläche des Jochs (20A) und radial äußeren Endabschnitte der Zähne (20B) ausgebildet ist und ein Krümmungsradius des Rundabschnitts 1,5 mm oder weniger ist.

7. Kompressor (10) nach Anspruch 6, wobei der Krümmungsradius des Rundabschnitts 0,5 mm oder weniger ist.

8. Kompressor (10) nach einem der Ansprüche 1 bis 7, wobei, wenn ein innerer Durchmesser des Statorkerns (20) d2 ist, eine Beziehung der Gleichung (6) erfüllt ist.

$$d2/d1 \geq 0,44\ldots \quad (6)$$

9. Kompressor (10) nach Anspruch 8, wobei, wenn der innere Durchmesser des Statorkerns (20) d2 ist, eine Beziehung der Gleichung (7) erfüllt ist.

$$d2/d1 \geq 0,58\ldots \quad (7)$$

10. Kompressor (10) nach einem der Ansprüche 1 bis 9, wobei, ein Übermaß des Statorkerns (20) in Bezug auf das Gehäuse (11) 0,05 mm oder mehr ist.

11. Kompressor (10) nach einem der Ansprüche 1 bis 10, wobei, wenn eine Plattendicke des Gehäuses (11) t ist, eine Beziehung der Gleichung (8) erfüllt ist.

$$t/d1 \geq 0,03\ldots \quad (8)$$

**Revendications**

1. Compresseur (10) comprenant :

un moteur (18) qui comporte un rotor (19A) rotatif autour d'un axe (O) et un noyau de stator (20) entourant le rotor (19A) depuis un côté périphérique extérieur autour de l'axe (O) ;
un mécanisme de compression (10A) qui est entraîné par le moteur (18) pour comprimer un réfrigérant ; et
un boîtier (11) qui couvre le moteur (18) et le mécanisme de compression (10A),
dans lequel la surface périphérique intérieure du boîtier a une forme circulaire lorsqu'elle est vue dans une direction de l'axe (O) et dans lequel une pluralité de parties de butée (T1) qui sont ajustées avec serrage sur la surface périphérique intérieure du boîtier (11) et une pluralité de parties de non-butée (T2) qui sont prévues respectivement pour être adjacentes aux parties de butée (T1) et sont séparées de la surface périphérique intérieure du boîtier sont formées sur une surface périphérique extérieure du noyau de stator (20),
dans lequel le noyau de stator (20) comporte une culasse (20A) annulaire ayant les parties de butée (T1) et les parties de non-butée (T2) et une pluralité de dents (20B) s'étendant vers l'intérieur dans une direction radiale de l'axe (O) depuis une surface périphérique intérieure de la culasse (20A),
dans lequel une partie périphérique extérieure de la culasse (20A) a une forme polygonale régulière lorsqu'elle est vue dans une direction de l'axe (O),
dans lequel chaque angle de sommet de la partie périphérique extérieure de la culasse (20A) est chanfreiné en une forme d'arc de manière à se conformer à la surface périphérique intérieure du boîtier (11), formant ainsi chacune des parties de butée (T1),
**caractérisé en ce que**
si une longueur totale de la pluralité de parties de butée (T1) est L et un diamètre extérieur du noyau de stator (20) lorsqu'il est vu dans une direction de l'axe (O) est d1, dans lequel d1 se rapporte à une longueur d'une ligne droite obtenue en reliant une partie périphérique la plus extérieure d'une partie de butée (T1), l'axe (O) et la surface périphérique intérieure du boîtier faisant face à la partie de butée (T1) à travers l'axe (O) les uns aux autres, une relation de l'expression (1) est satisfaite.

$$0,1 \leq L/d1 \leq 1,00\ldots \quad (1)$$

2. Compresseur (10) selon la revendication 1, dans lequel si la longueur totale de la pluralité de parties de butée (T1) est L et le diamètre extérieur du noyau de stator (20) est d1 lorsqu'il est vu dans la direction de l'axe (O), une relation de l'expression (2) est satisfaite.

$$0,1 \leq L/d1 \leq 0,35\ldots \quad (2)$$

3. Compresseur (10) selon la revendication 1 ou 2, dans lequel si la longueur totale de la pluralité de parties de butée (T1) est L et le diamètre extérieur du noyau de stator (20) est d1 lorsqu'il est vu dans la direction de l'axe (O), une relation de l'expression (3) est satisfaite.

$$0,1 \leq L/d1 \leq 0,18\ldots \quad (3)$$

**4.** Compresseur (10) selon l'une quelconque des revendications 1 à 3, dans lequel lorsqu'une dimension de la culasse (20A) dans la direction radiale de l'axe (O) est w, qui est une distance depuis une partie de liaison entre la surface périphérique intérieure de la culasse et chacune des dents jusqu'à la partie de non-butée la plus proche lorsqu'elle est vue dans la direction de l'axe (O), une relation de l'expression (4) est satisfaite.

$$w/d1 \leq 0,08... \quad (4)$$

**5.** Compresseur (10) selon la revendication 4, dans lequel une relation de l'expression (5) est satisfaite.

$$w/d1 \leq 0,06... \quad (5)$$

**6.** Compresseur (10) selon l'une quelconque des revendications 1 à 5, dans lequel lorsqu'elle est vue dans la direction de l'axe (O), une section arrondie courbée (R) est formée dans une partie de liaison entre la surface périphérique intérieure de la culasse (20A) et des parties d'extrémité extérieures radialement des dents (20B) et un rayon de courbure de la section arrondie est de 1,5 mm ou moins.

**7.** Compresseur (10) selon la revendication 6, dans lequel le rayon de courbure de la section arrondie est de 0,5 mm ou moins.

**8.** Compresseur (10) selon l'une quelconque des revendications 1 à 7, dans lequel lorsqu'un diamètre intérieur du noyau de stator (20) est d2, une relation de l'expression (6) est satisfaite.

$$d2/d1 \geq 0,44... \quad (6)$$

**9.** Compresseur (10) selon la revendication 8, dans lequel lorsque le diamètre intérieur du noyau de stator (20) est d2, une relation de l'expression (7) est satisfaite.

$$d2/d1 \geq 0,58... \quad (7)$$

**10.** Compresseur (10) selon l'une quelconque des revendications 1 à 9, dans lequel une interférence du noyau de stator (20) par rapport au boîtier (11) est de 0,05 mm ou plus.

**11.** Compresseur (10) selon l'une quelconque des revendications 1 à 10, dans lequel lorsqu'une épaisseur de plaque du boîtier (11) est t, une relation de l'expression (8) est satisfaite.

$$t/d1 \geq 0,03... \quad (8)$$

## FIG. 1

**FIG. 2**

**FIG. 3**

*FIG. 4*

|  | L/d1 | STEEL LOSS | COPPER LOSS | MOTOR EFFICIENCY |
|---|---|---|---|---|
| CASE 1 | 1.36 | 160.3% | 102.4% | 98.5% |
| CASE 2 | 1.84 | 145.6% | 105.3% | 98.7% |
| CASE 3 | 0.34 | 106.4% | 102.2% | 99.8% |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008271616 A
- EP 1833139 A2
- EP 1384893 A2
- JP 2015002650 A